# EUROPEAN PATENT APPLICATION

(11) **EP 2 579 193 A1**
(43) Date of publication of application: **10.04.2013**
(21) Application number: 12187698.1
(22) Date of filing: 08.10.2012
(51) Int. Cl.: G06Q 10/06

(54) **Call forward system**

(30) Priority: 07.10.2011 GB 201117412
(71) Applicant: Tensator Group Limited, Milton Keynes, Buckinghamshire MK14 6TS (GB)
(72) Inventor: Finch, Andrew, Tugby, Leicestershire LE7 9WF (GB)
(74) Representative: Somervell, Thomas Richard

(57) **Abstract**

An automated checkout call-forward (ECF) system comprises a queuing area for channelling customers, which leads to one or more checkouts. Each checkout comprises a service area and each checkout can be in either an available condition to accept a new customer, or in an unavailable condition. An indicator is capable of directing a customer to an available checkout. A sensor system is capable of detecting and providing output parameters indicative of the presence of one or more customers in the queuing area and the presence of one or more customers in the service area of each checkout. The automated ECF system is configured to identify any available checkouts based on interpreting the sensor output parameters and to instruct the indicator based on the identified available checkouts.

## Description

### Technical Field

This invention relates to call forward systems. More specifically, this invention relates to electronic call forward systems for use where customers need to queue for one or more service points, such as checkouts in shops or markets.

### Background Art

Call-forward systems are typically used where several service points, tills or checkouts are served by a single customer queue. A typical single-queue checkout system may consist of a dedicated queuing area in which customers are channelled towards the checkouts. Checkouts are available if they are ready to receive a customer. A call-forward system may also comprise an indicator that notifies a queuing customer if a checkout is available. Such indicators may be a central display (CDU) such as a TV or LCD screen which is placed near the exit of the queue and a number of displays (PDUs) placed at points where good visibility of the indicator is ensured. The indication may be a visual signal at each checkout or an audio signal, or a combination of signals. Another type of indicator that it is currently used in more sophisticated systems may display the number of and/or direction to the next available checkout. When a customer reaches the head of the queue, the customer waits until the system calls them to the next available checkout. Such systems are also referred to as electronic call forward (ECF) systems.

In single-queue checkout systems, the checkout operator will typically set the availability status when a transaction has just been concluded. Typically, it is the checkout operator who calls a customer forward by activating the indicator for his checkout, e.g., by pressing a button. The availability status and the call may be sent by the checkout operators for their checkout individually. Some systems may not require an individual display unit for each checkout.

A conventional ECF system can be characterised by three operative elements: First, each checkout position requires an actuator, e.g., a button, which the operator of the checkout uses to indicate the availability of his checkout, in order to call forward the next customer. Second, the call-forward system comprises an indicator such as a customer display unit (CDU), which is positioned in such a way that it can provide information to the customers in the queue, or to at least the customer at the head of the queue. When the operator registers the availability of his checkout, then this indicator calls the customer forward. Third, each checkout has an identifier that allows the customer to identify the checkout to which he is directed. This identifier may be realised in the form of a positional display unit (PDU).

Conceptually, customer behaviour when queuing for service points such as supermarket checkouts may be split into two phases: First, a first customer occupies a service area, such as a loading area of the checkout, e.g., by loading goods onto the checkout. In many cases the checkout comprises a transaction area in the form of a conveyor, in which case the customer would load the goods onto the conveyor. Second, that first customer occupies a clearing area of the checkout, e.g., by loading goods from the checkout into carrier bags after the checkout operative has registered or scanned the goods as part of the purchase transaction. The inventors of the present invention have observed that the checkout operator tends not to call a second customer forward until the first customer has completed each of the two phases, which causes delays. Alternatively, a checkout may not be manned by staff and may be operated by the customer. Such a checkout is referred to as self-scan checkout. The inventors have observed that customers can be hesitant to immediately proceed to a self-scan checkout as it becomes available, which also causes delays.

Moreover, conventional ECF systems do not always achieve the maximum throughput of customers because often customers are not aware that a checkout has become available. Further, because of the dependency on the judgement of the checkout operator, an error in the operator's judgement may mean that the customers that have been called forward to a checkout experience further delay before they can be served at the checkout, or that there is some downtime because a checkout operator fails to register his availability immediately. In short, existing ECF systems can lead to inefficiencies and customer frustration.

The present invention has been conceived with the foregoing in mind.

### Disclosure of Invention

In accordance with a first aspect of the present invention, there is provided an automated checkout call-forward (ECF) system as defined in claim 1. The system comprises a queuing area for channelling customers which leads to one or more checkouts, and an indicator capable of directing a customer to one or more available checkouts. The, or each, checkout comprises a service area, and can be in either an available condition to accept a new customer, or in an unavailable condition. The automated ECF system further comprises a sensor system which is capable of detecting and providing output parameters indicative of the presence of one or more customers in the queuing area and the presence of one or more customers within the service area of the, or each, checkout. The system is configured to identify any available checkouts based on interpreting the sensor output parameters and to instruct the indicator based on the identified available checkouts.

In accordance with a second aspect of the present invention, there is provided an automated service point call-forward system as defined in claim 5. The system comprises a queuing area which leads to one or more service points. Each service point has an availability status which is either an available status to accept a new customer, or an unavailable status. The system further comprises a sensor system capable of detecting and providing an output indicative of the number of customers in the queuing area and the presence of one or more customers in the service area of each service point. The system is configured to identify the availability status of said service points based on the presence of customers in said service areas, and to determine an estimated waiting time based on the number of customers in the queuing area and the number of available service points.

A system in accordance with the first aspect or the second aspect may be configured to interpret a checkout as an unavailable checkout when the sensor system detects that a customer is present in the service area of said checkout. The system may be configured to interpret a checkout as an available checkout when the sensor system detects that no customer is present in the service area of said checkout.

In an embodiment the service area consists of a loading area and the checkout further comprises a transaction area. In such an embodiment, the sensor system is further capable of detecting, and providing with the output parameters, parameters indicative of the presence of goods in the transaction area of the, or each, checkout. Conceptually, a checkout can be understood as an example of a service point. A service point is a station at which a customer or client can be provided with goods, services, or information, or undertake a transaction. The service point may be staffed, and may be, for example, a ticket office, security checkpoint, or information desk. The service point may be unstaffed, such as e.g. a computer station, ticket machine, or touch screen. Service points may comprise a service area, for example a loading area, in which a customer stays when he is being serviced, and a transaction area.

The sensor system may comprise individual sensors for the queuing area, and each loading area of each checkout. Any type of sensor that is capable of detecting a person in an area may be used, although preferably the sensors do not involve physical contact with the person. The sensor system may further comprise individual sensors for each transaction area of each checkout. The sensor system may comprise two or more sensors in a sensor bar. Sensors may be infrared sensors, ultrasonic sensors, or motion sensors, camera systems using motion sensing, or other sensor types. An exemplary sensor system is the video camera people counting system sold under the trade name STEPIN™ by Tensator Limited, Danbury Court, Linford Wood, Milton Keynes, MK14 6TS, UK. A passage through which customers have to pass is filmed as a video stream by a stationary camera, e.g. a ceiling camera. The camera may be a conventional video camera or a thermal (infrared) camera. Infrared cameras provide improved sensitivity for the presence of a customer because their body heat creates a thermal contrast. Differences within a frame area between consecutive frames of the video stream can be related to the presence of motion in the area of a frame. A difference between individual frames may occur if the camera records a customer walking through the passage. Parameters such as the size and shape of the frame area, change of shape, or the rate of change over time, can be analysed by software either against a preceding frame or against a reference frame.

It is an advantage that ECF system is automated and removes the requirement for actuation by the checkout operator. It is a further advantage that the usage rate of the checkout can be increased by ensuring that as soon as there is space available on the loading area of a checkout, a second customer is called forward to allow them to load their goods onto the loading area of the checkout while - and, in particular, even if - the first customer is still completing their transaction.

The transaction area may comprise a conveyor. The transaction area sensor may comprise a conveyor sensor bar. A sensor bar is a specific arrangement of a sensors system wherein a plurality of sensors is aligned so that the sensors cover an area that is larger than an area that could be covered by a single sensor. The purpose of aligning the sensors in a single unit is to facilitate the subsequent installation of the plurality of aligned sensors. Wherever this specification refers to a sensor, or sensor system, covering an area, and where this might involve installation and alignment of a plurality of sensors, the sensor system may be realised in the form of a sensor bar for practical purposes. A sensor bar can thus house a linear arrangement of sensors in order to create a wide sensing field. As an example, a sensor bar may be employed for monitoring the presence of goods on a conveyor. Each checkout of the plurality of checkouts may comprise an individual transaction area, with individual transaction area sensors for each transaction area.

In a preferred embodiment, the system is configured to interpret a checkout as an unavailable checkout when the sensor system detects a customer is present in the loading area of said checkout or one or more goods are present in the transaction area of said checkout.

In a preferred embodiment, the system is configured to interpret a checkout as an available checkout when the sensor system detects that no goods are present in the transaction area of the checkout and when the sensor system detects that no customer is present in the loading area of said checkout.

Embodiments may provide that only when a customer is detected in the queuing area and when a checkout is identified as available, the processor selects the available checkout and instructs the indicator to direct the customer to the available checkout. The processor may be configured to instruct the indicator to transmit an unavailability signal when a customer is detected in the queuing area and while each checkout is identified as unavailable. Further, the processor may be configured to instruct the indicator not to transmit directions while no customer is detected in the queuing area.

In one embodiment, the processor may be configured to provide an indication that the number of customers in the queuing area has reached a threshold such that additional checkouts need to be opened.

In one embodiment, the processor may be configured to provide an indication that the number of customers in the queuing area is below a threshold such that too many checkouts are available.

In one embodiment, the indication and/or the thresholds may be outside an error band in order to mitigate an overshoot response or other undesirable feedback loop. E.g., a system may be configured to avoid sending indications that too many checkouts are available shortly after an indication to increase the number of checkouts has been sent.

It is an advantage that this indication allows the number of open checkouts to be adjusted. For instance, in response to the indication, one or more staff members may be instructed to open a checkout. Alternatively, one or more checkout operators can be instructed to close their checkouts.

In embodiments of the invention, the sensor system may comprise individual sensors for the queuing area, and each loading area of each checkout. In embodiments comprising a transaction area, the sensor system may further comprise individual sensors for each transaction area of each checkout. The sensor system may comprise two or more sensors in a sensor bar. At least one of the individual sensors may be an infrared sensor. At least one of the individual sensors may be an ultrasonic sensor. The individual sensors may be motion sensors.

In one embodiment, the processor is configured to receive an input relating to the number of available checkouts and to the total number of checkouts. The total number of checkouts may be the sum of available checkouts and unavailable checkouts. In addition, the sensor system is configured to provide an indication about the number of customers in a queue to the processor. Depending on the accuracy of the sensor system, the indication may be an estimate of the number of customers in a queue.

In one embodiment, the processor is configured to derive an estimated waiting time from the number of customers in the queue to the number of available checkouts. A large number of customers in relation to the number of available checkouts would provide a longer estimated waiting time. Conversely, a low number of customers in relation to the number of available checkouts would provide a shorter estimated waiting time. In either case, the processor may be configured to provide an indication that the number of customers in the queuing area has reached a threshold.

The indication of a threshold can be an aid for staff members to adjust the number of open checkouts. For instance, the instruction may be provided to a supervisor for consideration or to individual staff members. As a consequence of the indication, the waiting time can be balanced with the number of staff attending checkouts.

In a third aspect of the present invention, there is provided a method of automatically calling customers forward from a queuing area to a checkout as defined in claim 14. The method comprises: (a) using a sensor system to monitor the queuing area for the presence of a customer; (b) using the sensor system to detect the presence of a customer within a loading area of said checkout and to detect the presence of goods in a transaction area of said checkout; (c) determining an availability status of said checkout; and (d) instructing an indicator based on the availability status of said one or more checkouts and the presence of a customer in the queuing area.

Step (c) may comprise qualifying the checkout as available if no customer is detected in the loading area and if no goods are detected in the transaction area. Step (c) may comprise qualifying the checkout as unavailable if a customer is detected in the loading area or if goods are detected in the transaction area.

Step (d) may involve a further step wherein, if a checkout is available and a customer is detected in the queuing area, said checkout is selected and the indicator is instructed to call the customer forward to the available checkout. Step (d) may involve a further step wherein, if no checkout is available and if a customer is detected in the queuing area, the indicator is instructed to transmit an unavailability signal. Step (d) may involve a further step wherein, while no customer is detected in the queuing area, the indicator is instructed not to transmit directions.

Among the many advantages which the automated ECF system of the present invention has over conventional systems are: more efficient use of available checkouts, therefore a reduction in the number of required checkouts for a given customer throughput and a reduction in associated resources; higher acceptance by customers by providing a transparent queuing system that appears fairer; better channelling of customers by reducing the number of queues, and less reliance on the actions of the checkout operator.

### Brief Description of the Drawings

Fig. 1 is a diagram of an exemplary operational schematic of the decision engine of in accordance with an embodiment of the present invention.
Fig. 2 shows a schematic top view of a layout of a typical array of conventional checkouts in a supermarket in which an embodiment of the present invention could be implemented.
Fig. 3 shows a schematic side view of service area, such as a checkout as described in an embodiment.
Fig. 4 shows a flow chart indicating steps of a method of using an automated ECF system.
Fig. 5 shows a flow chart indicating steps of another method of using an automated ECF system.

### Best Mode for Carrying out the Invention

The present invention is described using the example of a supermarket checkout area. Supermarkets are thought to benefit to a large extent from automated ECF systems. Of course, the checkout system is just one example of a service point system, and is not limited to supermarkets as such, but can be used for any kind of shop or event where a queuing line leads to number of checkouts or service points.

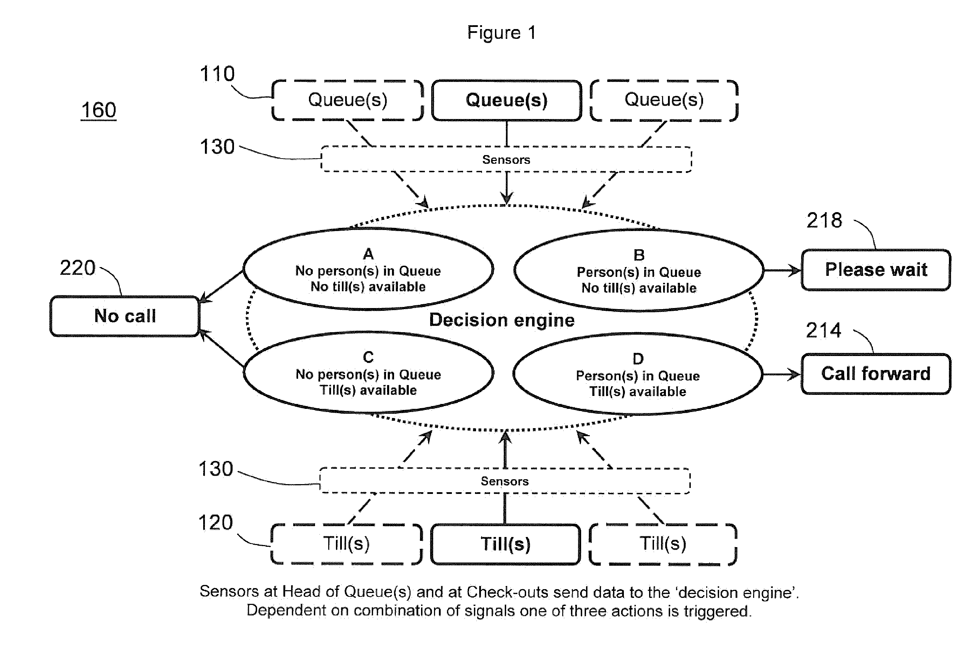

Fig. 1 is a diagram showing the operational schematic of the decision engine that governs the automated ECF system in accordance with embodiments of the present invention. In Fig. 1, sensors at the head of the queue or queues and at the checkouts, or tills, send data to a decision engine. Depending on the combination of signals, one of three actions is triggered. The sensors indicate whether a person is in a queue or not, and whether a checkout, or till, is available or not. Therefore, there are four possible combinations: (A) no person in queue and no checkout available; (B) person in queue and no checkout available; (C) no person in queue and checkout available; and (D) person in queue and checkout available. Depending on the combination, one of three actions can be triggered. Said actions are "No call" in response to combinations (A) or (C), or "Please wait" in response to combination (B), or "Call forward" in response to combination (D). The implementation of the automated ECF system shall now be described in more detail.

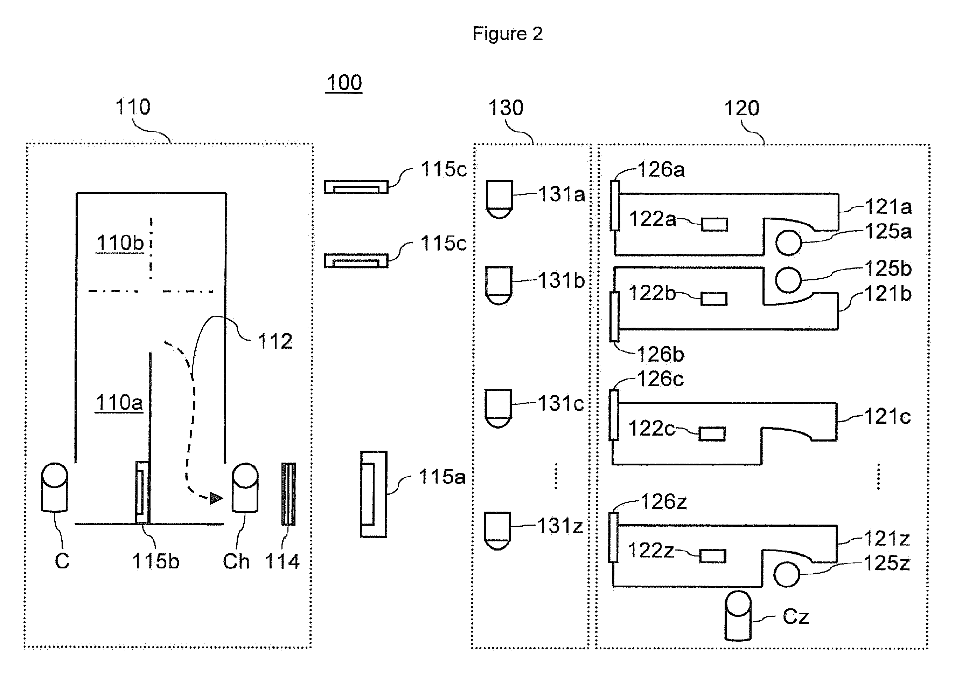

Fig. 2 shows a schematic top view of an extended supermarket checkout area 100. Leading to the checkout area is queuing area 110. Queuing area 110 it is an area wherein customers, including a customer at the head of the queue, are channelled towards the checkouts. Queuing area 110 may have a permanent layout 110a providing a proposed path 112 for channelling customers, or may have an adjustable layout that can be adapted according to the number of customers, e.g., by rerouting path 110a to also comprise path 110b. Customers are channelled through the queuing area in the direction of path 112 towards the head of the queue 114. It is customary for customers to wait at the head of the queue and therefore often a simple indicator 114 such as a line drawn on the floor can be sufficient to indicate the end of the queuing area to the customer Ch at the head of the queue. For the purposes of Fig. 2, queuing area 110 is represented as capable of containing the entire queue.

In the context of one embodiment, the queuing area 110 has to be understood as the area which a sensor covers as it monitors the presence of a customer Ch at the head of the queue, which will be discussed in more detail below. In practice, queuing area 110 may therefore not cover the entire area in which a queue of customers forms.

A convenient method of monitoring the queue length is by using camera technology. Ceiling-mounted cameras can be conveniently positioned above the queuing area 110. The queue length may also be measured by using sensors that are spaced apart within the queuing area.

In an embodiment, one or more sensors of the sensor system cover a larger proportion or the entire queuing area 110. In this embodiment, the sensor system can be configured to derive the number of customers in a queue. In one embodiment, the sensor system is configured to determine a parameter indicative of the number of customers in a queue and use this parameter as an input for determining an estimated waiting time. The parameter may be an estimate of the number of customers in the queue. The system can then create instructions on the basis of the estimated waiting time.

Customers C are queuing for using one of several checkouts 121a, 121b, 121c, ..., 121z, of supermarket checkout array 120. Such checkouts may have identical arrangement, such as checkouts 121a, 121c, 121z in Fig. 2. Checkouts may also be combined in pairs or in an alternating arrangement, such as checkouts 121a and 121b in Fig. 2. The invention is not limited to a specific layout of checkouts, whether in line, staggered, or in a complex arrangement. However, where this specification refers to a checkout, it refers to a single unit capable of serving a customer. I.e., even if checkouts 121a and 121b would be installed as a single checkout unit, it would still represent two checkouts 121a and 121b for the purposes of this disclosure.

Each checkout may be manned by a checkout operator or be a self-scan checkout. In the example of Fig. 2, checkouts 121a, 121b, and 121z are staffed by checkout operators 125a, 125b, and 125z. Checkout 121c is not staffed, and for the purposes of this discussion is unavailable. It can be seen in the exemplary scenario of Fig. 2 that a customer Cz is present at checkout 121z and that no customer is present at least at checkout 121b. In this situation, a customer Ch at the head of the queue may be called forward to use checkout 121b.

According to embodiments of the present invention, an indicator 115a is positioned so that it can transmit instructions to customer Ch at the head of the queue. Indicator 115a may be a display panel such as an LCD screen or a television screen. Indicator 115a may provide an audio signal such as an unintrusive chime or a verbal instruction. Although the preferred embodiment does not require more than one indicator, there may be more than one indicator. In the example of Fig. 2, an indicator 115b is positioned within the queuing area and further indicators 115c are positioned near checkouts that are further away from the head of the queue. It is clear that not all indicators 115a, 115b, 115c have to be visible to each customer, nor do they have to be directed at a specific customer or transmit the same signal. In some embodiments, an indicator is provided to provide a threshold indication that the number of customers in the queuing area, or the number of customers as estimated, has reached a threshold. The threshold indication may be provided alternatively or concurrently with the customer instructions. In one embodiment, the indications are provided by different indicators.

Embodiments of the present invention may be implemented in existing checkout systems which are individually equipped with conventional indicators 122a, 122b, 122c, ..., 122z.. In this case, indicators 115c may be positioned at each checkout by replacing or complementing conventional individual indicators 122a, 122b, 122c, ..., 122z. In the example of Fig. 2, each checkout is equipped with an identifier 126a, 126b, 126c, ..., 126z, that indicates the checkout position to the customer. These identifiers may be separate signs or may be combined with or integrated into individual conventional indicators 122a, 122b, 122c, ..., 122z. Consequently, the identifiers may also be combined with or integrated into indicators 115c.

Embodiments of the present invention comprises a sensor system 130. The sensor system 130 can be implemented in various forms, and any type of sensors suitable for detecting the presence of a customer in an area of interest could be used, such as passive infrared sensors or ultrasonic sensor technology, or cameras combined with motion detection algorithms or recognition software, or a conveyor sensor bar. In the context of this embodiment, a sensor system is the complete set of sensors that are required to operate the automated ECF system 150. A sensor subsystem is a set of sensors that is required to cover a single checkout. A subsystem may also be capable of sensing several checkouts. In the example of Fig. 2, several sensor subsystems 131a, 131b, 131c, ..., 131z, are employed. In the preferred embodiment, the sensors for the checkout and for the queuing area are electronic motion sensors. In an alternative embodiment, the sensor for the queuing area may be installed into sign 114.

In one embodiment, the sensor system 130 is configured to derive parameters indicative of the number of customers in the queue area 110. Camera technology can be configured to cover any area or layout. The measurement is facilitated for a single line queue. A single line queue may lead through a passage of about 1 to 1.5 metre width through which customers are channelled. The number of customers in the queue is determined by the difference between customers serviced at athe service points or checkouts and the customers entering through the passage. This allows the number of customers in a queue to be determined dynamically.

Motion sensors or proximity sensors within a queue are triggered as a customer is present in front of the respective sensor. A good approximation of the number of people in a queue can be derived from the length of time the motion or proximity sensors are triggered.

This can be facilitated, e.g., by placing sensors within a single queue line. In practice, a number of different sensor technologies are suitable for this purpose, depending on the layout of the queue system. Suitable sensor technologies are IR sensors, ultrasonic sensors, or camera systems, as described hereinbefore.

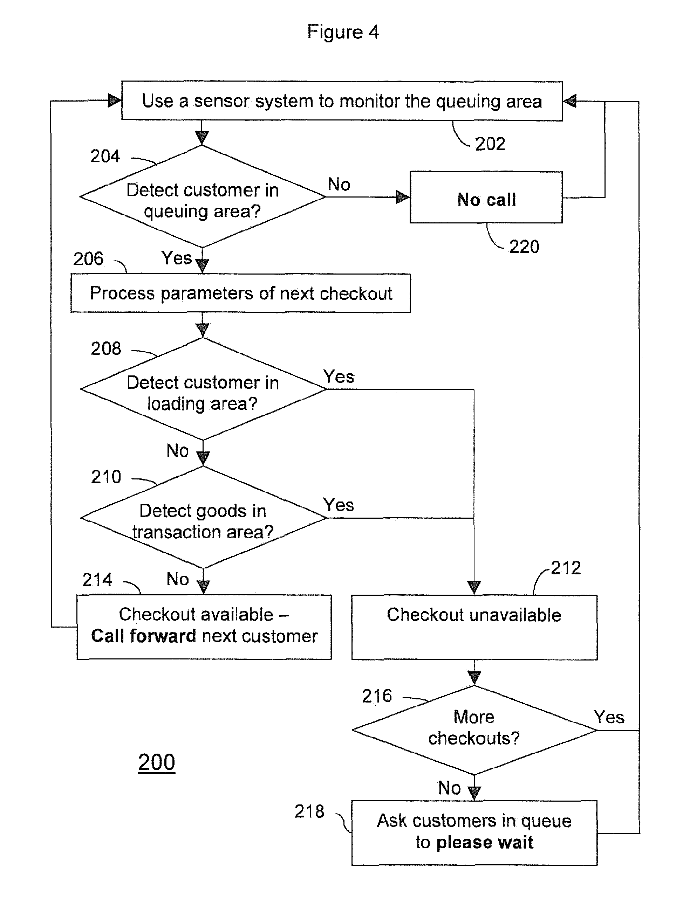

The automated ECF system 150 comprises a processor (not shown in the Figures). The processor executes the logic of decision engine 160, as shown conceptually in Fig. 1 and as flow chart in Fig. 4. The processor may be housed in a separate device or be incorporated in one of the sensors or in one of the indicators. For instance, the main indicator 115a may contain the processor. Alternatively or concurrently, the automated ECF system 150 may consist of a main sensor system 130 which optionally comprises auxiliary sensor subsystems 131a, 131b, 131c, ..., 131z, in which case the processor may be co-located with the main sensor.

The number of people in a queue may be larger than the number of customers in a queue. In embodiments that are configured to determine the number of customers in the queuing area 110, the sensor system 130 or the processor may comprise a correction function that determines whether the individuals within the queuing area belong to the same group or not. For instance, sensor systems are capable using a proximity algorithm for determining the proximity of individuals to a centre point. Such proximity algorithms can determine, e.g., whether three individuals are more likely to belong to a group (e.g., two partners with one child) which will require a single checkout, or whether the three individuals are likely to require three individual checkouts. Known proximity algorithms achieve a level of accuracy that is sufficient for the purposes of a dynamic queue length determination.

As an alternative or supplement to a proximity algorithm, the system may determine an estimate of the number of customers in relation to the number of people in a queue based on a statistical parameter. The system may be configured to derive that for any given number of people in a queue X the number of customers in a queue Y can be estimated to be, on average, a certain proportion n of X, where n = Y < X. E.g., Y may be 0.6 × X. The proportion may vary according to other parameters, such as time, day, weekday, number of available checkouts, etc.

Alternatively, other methods may be used to estimate a number of customers in a queue. For example, camera or sensor systems may be configured to detect a number of carts or baskets being used by customers in the queuing area.

The individual sensors and indicators may be connected by wire or wirelessly. In the preferred embodiment, the sensor system and the indicators are individually powered by mains power connections. However, in certain situations it may be more economical or dictated by the layout of the location that certain components of the automated ECF system 150 share a power point or that certain components are battery-powered.

In Fig. 2, the components of queuing area 110, checkout array 120, and sensor system 130 are clustered into arbitrary areas represented by dotted rectangles. These rectangles 110, 120, 130 indicate a degree of relationship between the components they contain for the purpose of facilitating comprehension of Figure 1, but shall in no way be understood a designating exclusive, physically separated areas as such. In particular, the sensor system 130 is likely to be installed within the area of array 120.

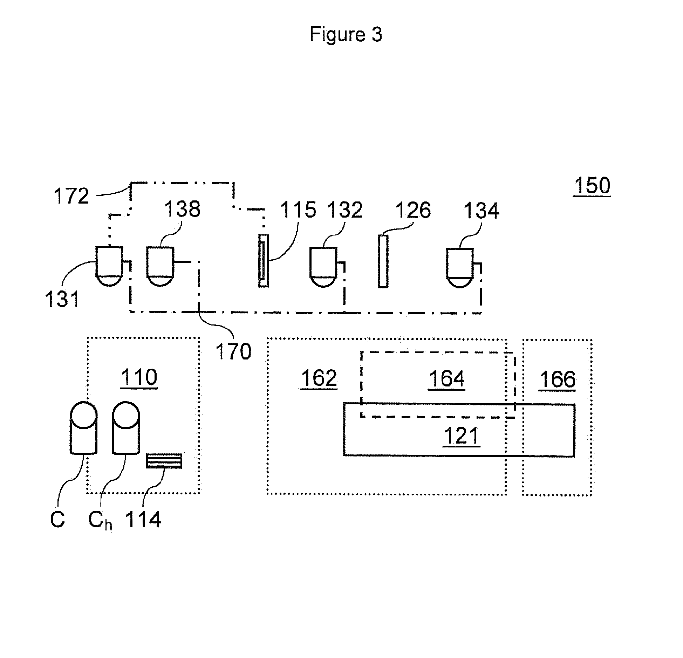

Fig. 3 shows a schematic side view of automated ECF system 150 implemented for a single checkout 121 identified by identifier 126. For simplicity no checkout operator is shown in Fig. 3. As such, the checkout 121 of Fig. 3 is representing a self-scan checkout. However, particularly if checkout 121 is not a self-scan checkout, it may be required to be staffed in order to be an available checkout. Customers C, Ch form a queue. At the head of the queue 114 is customer Ch. Customer Ch is inside queuing area 110. In Fig. 3, another customer C is not fully within queuing area 110. The automated ECF system 150 comprises indicator 115 and identifier 126, each of which may be ceiling-mounted. As mentioned above, identifier 126 may be a passive display area onto which indicator 115 projects a message.

Checkout 121 in Fig. 3 is representative for each checkout 121a, 121b, 121c, ... , 121z in Fig. 2. Three physical areas are assigned to each checkout, a loading area 162, a transaction area 164, and a clearing area 166. Loading area 162 is the area at the front of the checkout 121, where customer Ch approaches the checkout 121 and loads his goods onto the checkout 121. Loading area 162 may further comprise one or more sides of the checkout 121. The customer in the loading area places the goods in the transaction area 164. In the case of a staffed checkout, the transaction area 164 may comprise a conveyor along which the goods are moved towards the operator as they are checked out. The transaction area of a self-scan checkout, on the other hand, it is typically not furnished with a conveyor and instead has an area where goods are placed or bagged.

Clearing area 166 is the area where the bagged goods are collected for removal by the customer after being checked out, and from where the customer may finalise the transaction (i.e., pay for the goods purchased). It will be seen that as long as either loading area 162 or transaction area 164 are occupied, a checkout should be qualified as unavailable. However, presence of a customer in area 166 should not affect the availability status of a checkout.

In addition to the three areas of the checkout, there is a fourth sensing area covering the head of the queue. This area is the queuing area 110 as discussed above. The location of the head of queue may be marked with sign 114. However, such a marking may not be necessary if it is clear to the customer Ch, for instance by way of shelving layout, that he has reached to end of the queuing area.

In one embodiment, the fourth sensing area covers the queuing area 110. In practice, depending on the sensor system, there may be blind spots. Further, it may not be economical to cover an entire queuing area. The queuing area may comprise a passage through which customers are channelled. A passage allows blind spots to be reduced. In any case, the coverage is such that a meaningful estimate of the number of customers in a queue can be made. Therefore, the sensor system can be configured to cover a passage or an area in which customers are expected to form a queue. Such a configuration facilitates the determination of the number of customers in the queue, or an estimate thereof, by the processor.

A sensor subsystem 131 as described in the context of Fig. 2 is now discussed in some more detail in relation to areas 162, 164 and 110, in Fig. 3. Each of the areas has a dedicated sensor unit. Sensor 132 is able to detect the presence of a customer in loading area 162. Sensor 134 is able to detect the presence of goods within transaction area 164. Sensor 138 is able to detect the presence of a customer at the head of the queue in queuing area 110. The sensing range of some of the sensors covering a checkout may overlap, if this overlap does not interfere with the logic that qualifies the availability status of that checkout. For instance, it will later be seen that the presence of a customer in the loading area or the presence of goods in the transaction area define a checkout as being an unavailable checkout. Therefore, it may make sense to overlap the range of sensors 132 and 134.

In the example of Fig. 3, sensors 132, 134 and 138 are linked via a connection 170 to a unit 131 of the sensor subsystem. Connection 170 may be a data connection, power connection, or both. Alternatively, connection 170 may be wireless. As discussed above, some or all sensors 132, 134 and 138 may be integrated in to a single unit. Fig. 3 further shows a connection 172 from one of the sensors, unit 131 in the example of Fig. 3, to indicator 115. Similar to connection 170, connection 172 may be wireless or wired, and may provide electrical power to indicator 115.

One component of the automated ECF system 150 is a processor that evaluates the sensor readings, and instructs the indicator or indicators accordingly. The processor is not shown in the Figures for reasons of simplicity. For instance, as set out above, the processor may be contained within indicator 115.

The processor contains an instruction set that allows determining whether a checkout 121 is in an available condition to accept a customer or in an unavailable condition. The availability status of each checkout 121 is determined continuously or on request of the processor.

The determination of the availability status is based on the presence of a customer C in one of the checkout areas and the presence of goods in the transaction area, as indicated in Fig. 1. More specifically, the decision engine, or logic, governing the processor qualifies a checkout as unavailable if the sensors detect a customer at the checkout loading area or goods in the transaction area. A checkout is available if there is no customer detected at the loading area and there are no goods detected in the transaction area. In recognition of the fact that there will be a delay between the time when a customer is called forward to a checkout and the time when the customer starts loading goods into the transaction area, the system may be programmed to wait for a predetermined length of time after a customer has been called forward to a checkout before processing the sensor signals for that checkout again.

In the example of Fig. 3, if sensor 132 does not detect the presence of a customer in the loading area 162 and sensor 134 does not detect the presence of goods in the transaction area 164, then the processor qualifies the checkout 121 as an available checkout. If sensor 132 detects the presence of a customer in loading area 162, then the processor will qualify this checkout 121 as unavailable. Equally, if sensor 134 detects the presence of goods in the transaction area 164, then the processor will qualify this checkout 121 as unavailable.

In some embodiments of the present invention, transaction area 164 may overlap with loading area 162. In this scenario, a checkout may therefore not require the additional sensor 134. Embodiments of the present invention also cover the situation where the transaction area 164 does not completely overlap with loading area 162 and needs to be monitored by a specific sensor 134.

The processor determines the availability status of each checkout of the checkout area 100. As long as all checkouts are qualified as unavailable checkouts, the processor will instruct the indicator 115 to display an unavailability signal (i.e. ask customers in the queuing area 110 to wait). Whenever a checkout becomes available, this is communicated to a queuing customer Ch by indicator 115. When several checkouts are available at the same time, the processor selects one of the available checkouts and instructs the indicator accordingly.

In one embodiment, the processor is configured to provide a checkout adjustment indication. A checkout adjustment is advantageous because it allows the number of instances in which an unavailability signal is displayed to be reduced. This indication may be an automatically generated message sent by E-mail, text or similar modality to a member of staff or to a person responsible for maintaining the operation of checkouts.

In one embodiment, the checkout adjustment indication is sent in response to the queue length and estimated waiting time within the queue area. The checkout adjustment indication may contain additional information or recommendations, depending on the algorithms employed and dependent on the input available to the processor. Possible input values are: the number of unstaffed checkouts, the number of staff available for reassignment, the number of people in the queuing area, the group size of people in the queuing area, the number of self-scan checkouts, the time and weekday, weekend and/or holiday status, and others.

In one embodiment, an optimum maximum waiting time and/or a threshold number of open checkouts can be set as a threshold value for sending the checkout adjustment indication. The optimum maximum waiting time may be set manually, in which case a limited group of people may be authorised to set the optimum maximum waiting time.

The checkout adjustment indication may be the difference between the existing number of open checkouts, and the number of checkouts that should be open to achieve the optimum maximum waiting time. The checkout adjustment indication may be the difference between the existing number of open checkouts, and the threshold number of open checkouts.

The provision of a checkout adjustment indication is advantageous because it may be used by a member of staff (who may be a supervisor) as the basis to decide whether or not to increase or decrease the number of open checkouts.

Independent of the checkout status, the head of the queue is monitored for the presence of a customer Ch. In a preferred embodiment, the processor only instructs the indicator 115 to call a customer Ch forward when a customer is present in queuing area 110. If no customer Ch is present in queuing area 110, the processor may instruct indicator 115 to transmit an idle message or other information content.

Fig. 4 is a flow diagram illustrating the logic of an automatic ECF procedure 200, implementing the schematic of Fig. 1. At step 202 the sensor system monitors the queuing area as well as the loading areas and transaction areas of the one or more checkouts. At step 204 a determination is made as to whether a there is a customer in the queuing area. If not, then in step 220 no call is made and the procedure loops back to continue the monitoring. If a customer is detected in the queuing area, then at step 206 the sensor parameters of the next checkout are processed. At step 208 a determination is made as to whether a customer is detected in the loading area of the checkout. If a customer is detected in the loading area, then the procedure continues at step 212 and the checkout is designated as unavailable.

However, if no customer is detected in the loading area, then at step 210 a further determination is made as to whether there are goods in the transaction area of the checkout. If no goods are detected in the transaction area, then the procedure continues at step 214. If goods are detected in the transaction area, then at step 212 the checkout is designated as unavailable.

At step 214, the checkout is designated as available (because there is both no customer in the loading area and there are no goods in the transaction area), and the customer at the head of the queue in the queuing area is called forward (i.e. the indicator is instructed to call the customer to the available checkout). The procedure then returns back to step 202.

If either at step 208 it is determined that a customer is present in the loading area or at step 210 it is determined that there are goods in the transaction area, the procedure continues to step 212, and then to step 216 where a determination is made as to whether there are any more checkouts to consider. If not, and all checkouts are designated as unavailable, then at step 218 the indicator is instructed to indicate to customers in the queuing area to wait. If at step 216 not all the checkouts have been designated as unavailable, then the procedure loops back to step 202 to check whether a customer is in the queue, to then consider the parameters of the next checkout.

According to the schematic decision logic of Fig. 1, steps 208 and 210 could be determined in parallel, or alternatively, step 210 may precede step 208.

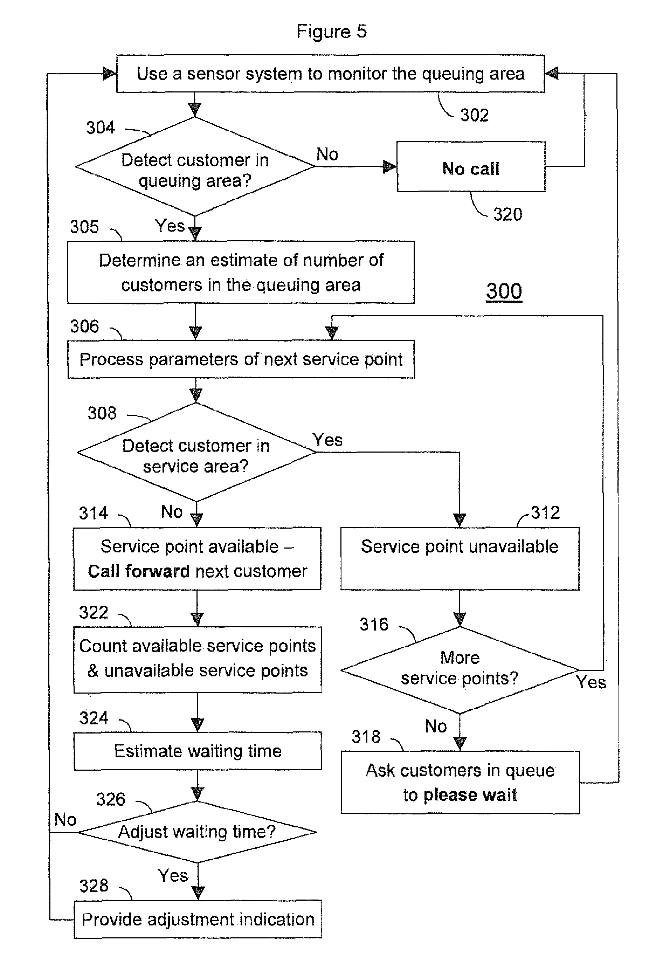

Fig. 5 is a flow diagram illustrating the logic of an automatic ECF procedure 300, implementing the schematic of an embodiment. At step 302 the sensor system monitors the queuing area as well as the service areas of the one or more service points. At step 304 a determination is made as to whether a there is a customer in the queuing area. If not, then in step 320 no call is made and the procedure loops back to continue the monitoring. However, an indication may be provided to keep a minimum number of checkouts or service points staffed even though no customer is present in the queue. The indication may comprise an adjustment indication to close any checkouts or service points exceeding the minimum number of checkouts. If a customer is detected in the queuing area, then at step 305 the number of customers, or an estimate thereof, is determined. At step 306 the sensor parameters of the next service point are processed. At step 308 a determination is made as to whether a customer is detected in the service area of the checkout. If a customer is detected in the service area, then the procedure continues at step 312 and the checkout is designated as unavailable.

If no customer is detected in the service area, then the procedure continues at step 314. At step 314, the service point is designated as available (because there is no customer in the service area). The system may at this point provide an indication to the customer at the head of the queue inviting him to go to the available checkout or service point.

If at step 308 it is determined that a customer is present in the service area, the procedure continues to step 312, and then to step 316 where a determination is made as to whether there are any more checkouts to consider. If not, and all checkouts are designated as unavailable. In this case, at step 318 the indicator may be instructed to indicate to customers in the queuing area to wait. If at step 316 not all the checkouts have been designated as unavailable, then the procedure loops back to step 306 to consider the parameters of the next checkout. Alternatively, but not shown in Fig. 5, the system may loop back to step 302 to check whether there is still a customer is in the queue before considering the parameters of the next checkout.

Steps 305 and any one of steps 306, 308, 314 could be determined in parallel, or alternatively, step 305 may follow any of steps 306, 308, 314. In step 322, the number of available and unavailable service points is determined. The number of available service points depends not only on the number of customers but also on other factors such as staffing levels.

In step 324, the waiting time is estimated. The waiting time can be estimated on the basis of the number of people in the queue and the number of available checkouts. For instance, the waiting time may be calculated as an average waiting time. The average waiting time may be calculated according to the formula T_{W} = C_{Q} × (T_{A} / SP_{A}), wherein the T_{W} is the average waiting time, C_{Q} is the number of customers in the queuing area (or an estimate thereof), T_{A} is the average transaction time at a service point, estimated as the time between a customer approaching a service point and that customer leaving the service point, and SP_{A} is the number of available service points.

Based on the estimated waiting time and the number of available service points and unavailable service points, a determination can be made whether or not is possible to open service points to reduce the waiting time, or whether the waiting time is so short as to justify closing available service points. This determination is made at step 326. If at step 326 a determination is made that the waiting time does not need to be adjusted, the system loops back to step 302 and checks whether a customer is present in the queuing area. If at step 326 a determination is made that the waiting time should be adjusted, the system continues to step 328 and then to step 302.. In step 328, an indication is provided that the waiting time should be adjusted.

The above description is based on checkouts or service points that are staffed by checkout operatives. However, the same principles can be applied equally to self-scan checkouts, where customers scan in and pay for the purchased goods at an unmanned checkout, because the automated ECF system relies only on sensors and does not require actuation by a checkout operator.

## Claims

1. An automated electronic call-forward, ECF, system for a checkout, comprising:
a queuing area for channelling customers which leads to one or more checkouts, wherein each checkout comprises a service area and wherein each checkout can be in either an available condition to accept a new customer, or in an unavailable condition;
an indicator capable of directing a customer to an available checkout; and
a sensor system capable of detecting and providing output parameters indicative of the presence of one or more customers in the queuing area and the presence of one or more customers in the service area of each checkout;
wherein the automated ECF system is configured to identify any available checkouts based on interpreting the sensor output parameters and to instruct the indicator based on the identified available checkouts.

2. The automated ECF system according to claim 1, wherein the sensor system is further capable of detecting, and providing with the output parameters, parameters indicative of the estimated number of customers in the queuing area.

3. The automated ECF system according to claim 1 or 2, further comprising a processor configured to receive an input relating to the number of available checkouts and to the number of unavailable checkouts.

4. The automated ECF system according to any one of the preceding claims, wherein the processor is further configured to derive an estimated waiting time from the number of available checkouts and the estimated number of customers in the queue.

5. An automated electronic call-forward, ECF, system for a service point, comprising:
a queuing area which leads to one or more service points, and wherein each service point has an availability status which is either an available status to accept a new customer, or an unavailable status; and
a sensor system capable of detecting and providing an output indicative of the number of customers in the queuing area and the presence of one or more customers in the service area of each service point;
wherein the automated ECF system is configured
to identify the availability status of said service points based on the presence of customers in said service areas, and
to determine an estimated waiting time based on the number of customers in the queuing area and the number of available service points.

6. The automated ECF system according to claim 4 or 5, wherein the processor is further configured to provide an indication that the estimated waiting time is above a set lower threshold or below a set upper threshold.

7. The automated ECF system according to any one of claims 4 to 6, wherein the processor is further configured to provide an adjustment indication based on the estimated waiting time and a predetermined desired waiting time, wherein the adjustment indication is an indication to open one or more of any unavailable checkouts or one or more of any unavailable service points or to close one or more of any available checkouts or one or more of any available service points.

8. The automated ECF system according to any one of the preceding claims, configured to interpret a checkout as an unavailable checkout or a service point as an unavailable service point when the sensor system detects that a customer is present in the service area of said checkout or said service point.

9. The automated ECF system according to any one of the preceding claims, wherein the queuing area comprises a linear passage through which the customers are channelled, which linear passage is covered by sensors of the sensor system.

10. The automated ECF system according to any one of the preceding claims, wherein:
the service area consists of a loading area;
the checkout or the service point further comprises a transaction area; and
the sensor system is further capable of detecting, and providing with the output parameters, parameters indicative of the presence of goods in the transaction area.

11. The automated ECF system according to any one of the preceding claims, configured to interpret a checkout as an unavailable checkout, or to interpret a service point as unavailable service point, when the sensor system detects that a customer is present in the loading area of said checkout or said service point or one or more goods are present in the transaction area of said checkout or said service point; and/or configured to interpret a checkout as an available checkout, or to interpret a service point as an available service point, when the sensor system detects that no customer is present in the loading area of said checkout or said service point and no goods are present in the transaction area of said checkout or said service point.

12. The automated ECF system according to any one of the preceding claims, wherein, in operation, when a customer is detected in the queuing area and when a checkout or a service point is identified as available, the processor selects said available checkout or said available service point and instructs the indicator to call forward the customer to said available checkout or to said available service point.

13. The automated ECF system according to any one of the preceding claims, configured to instruct the indicator to transmit an unavailability signal when a customer is detected in the queuing area and while each checkout or each service point is identified as unavailable.

14. A method of automatically calling customers forward from a queuing area to a checkout or service point, the method comprising:
a) using a sensor system to monitor the queuing area for the presence of a customer;
b) using the sensor system to detect the presence of a customer within a loading area of said checkout or a service area of said service point;
c) determining an availability status of said checkout or said service point;
and
d) instructing an indicator based on the availability status of said one or more checkouts or said one or more service points and the presence of a customer in the queuing area.

15. The method according to claim 14, wherein step b) further comprises using the sensor system to detect the presence of goods in a transaction area of said checkout or said service point.

16. The method according to claim 14, wherein step c) further comprises qualifying the checkout or the service point as unavailable if a customer is detected in the loading area and/or wherein step c) further comprises qualifying the checkout or the service point as unavailable if goods are detected in the transaction area.

17. The method according to any one of claims 13 to 15, wherein step d) further comprises:
d-i) if a checkout or a service point is available and a customer is detected in the queuing area, selecting said checkout or said service point and instructing the indicator to call the customer forward to said available checkout or said available service point;
d-ii) if no checkout or no service point is available and if a customer is detected in the queuing area, instructing the indicator to transmit an unavailability signal; and
d-iii) while no customer is detected in the queuing area, instructing the indicator not to transmit directions.
